# EUROPEAN PATENT APPLICATION

(11) **EP 2 191 942 A1**
(43) Date of publication of application: **02.06.2010**
(21) Application number: 08105873.7
(22) Date of filing: 26.11.2008
(51) Int. Cl.: B25J 15/04

(54) **Multi-handling tool**

(71) Applicant: F. Hoffmann-La Roche AG, 4070 Basel (CH); Roche Diagnostics GmbH, 68305 Mannheim (DE)
(72) Inventor: Castern, Haack, 6330 Cham (CH); Ueli, Stettler, 6330 Cham (CH)
(74) Representative: Herren, Barbara

(57) **Abstract**

The present invention relates to an analytical system comprising handling device for simultaneously handling multiple analytical disposables, said handling device comprising
- an interface for interacting with at least two analytical disposables, and
- at least one actuator, wherein the number of actuators is lower than the number of analytical disposables.

## Description

The present invention relates to an analytical system comprising a handling device for handling more than one analytical disposables, wherein said handling device at least one actuator, wherein the number of actuators is lower than the number of analytical disposables.

Handling devices are commonly used in analytical systems. Such analytical systems may comprise e.g. a storage station and/or a processing station and/or an incubation/detection station. A storage station stores analytical disposables to be moved to a processing station, where said analytical disposables are used e.g. to transfer liquids, or to hold liquids for analysis during processing of the liquids. Usually, in such analytical systems, multiple samples need to be processed in parallel. Thus, the analytical disposables with the samples need to be handled simultaneously.

### Description

The object of the present invention is an analytical device with an improved handling device for handling multiple disposables simultaneously.

The present invention, thus, relates to an analytical system comprising a handling device for handling multiple analytical disposables, said handling device comprising
- a handling tool with an interface for interacting with at least two analytical disposables, and
- at least one actuator which reversibly connects to said handling tool, wherein the number analytical disposables;
wherein said analytical disposables are handled simultaneously.

The term "analytical system" as used herein refers to systems which can perform parts or all steps of an analytical diagnostic test. Thus, in an analytical system, an analyte the presence or absence of which correlates with a disease or a condition in a human or an animal can be processed or determined. Said analytical system may comprise different stations, e.g. storage and/or processing and/or detection stations.
The term "handling device" as used herein relates to a device with which more than one disposables can be handled. Handling comprises any type of operation exerted on said disposables by said handling device.
The term "analytical disposables" as used herein relates to disposables used in analytical systems. Such disposables include, as non-limiting examples, tubes for holding liquids to be used or analysed in the analytical test, or pipette tips for transferring liquids.
The term "handling tool" relates to a device with which disposables can be handled. Non-limiting examples of handling tools are gripping tools, piercing tools, lid opening or closing tools etc.
The term "interface" as used herein relates to a part of the handling device which is brought into direct contact with the analytical disposables. Thus, the handling device interacts with the disposables through its interface.
The term "actuator" as used herein refers to a device which drives and/or controls specific functions which are exerted on the analytical disposables by a handling device.
The term "treatment" as used herein refer to any type of transport, movement, incubation at specific conditions, or manipulation. Specific conditions may, as non-limiting examples, be specific temperature conditions and/or specific periods of incubation. Manipulation may, as a non-limiting example, mean the opening or closing of a lid, or the pipetting of liquids to the disposables, or the removal of liquids to the disposables.

It is important to understand that all analytical disposables handled by one handling device are handled simultaneously. This means that one or more operations controlled by at least one actuator are exerted on said analytical disposables in the same way, within the same time and under the same conditions. This ensures equal and consistent treatment of the analytical disposables, and of the contents of the analytical disposables.

Preferred examples of handling are, as non-limiting examples, rotating of the disposables, opening or closing of lids of the handling device, piercing of needles through lids of analytical disposables to add or remove liquid etc.

Preferably, any one of said actuators can control multiple functions. More preferably, any one of said actuators controls one or more functions that are different from any of the other actuators. Preferred functions of said actuators are movement, transport or treatment of disposables, opening and closing of lids, piercing of needles through lids of disposables. Preferred types of movement are rotation, vertical or horizontal movement of the disposables.

In a preferred embodiment of the analytical system hereinbefore described, said handling device comprises three, even more preferably two, most preferably one actuator.

In a preferred embodiment of the system hereinbefore described, said actuator is reversibly connected to said handling device. This allows the use of the same actuator for different handling devices. It also allows for parking of one handling device when convenient.

One preferred type of handling of the handling device hereinbefore described is gripping. Thus, in a preferred embodiment, the handling device is a gripping device.
The term "gripping device" as used herein relates to a device which can grip more than one analytical disposables. A gripping device thus comprises a gripping tool.

The interface consists of gripping jaws. The term "gripping jaws" as used herein relates to parts of the gripping device which can be moved such that, in a closed state, they are in firm contact with the analytical disposables to be handled, while in an open state, they are in a position sufficiently distant to the analytical disposables that said analytical disposables can not be held or moved by said gripping device.

A gripping device operated by a single actuator allows simultaneous handling of multiple analytical disposables. This is advantageous because it allows the multiple analytical disposables to be handled in the same way, allowing to obtain more consistent results from the analysis.

Preferably, said actuator can perform multiple operations. Non-limiting examples of operations that can be performed by said actuator are opening and closing of said gripping jaw, connecting to said gripping jaws, or releasing said gripping jaws. Thus, analytical disposables can be gripped, held, moved upwards, downwards or sideways, they can be rotated or shaken, and other movements can be performed with them.

While the actuator drives the movement of the gripping jaws of the gripping device, the movement may be controlled, in a preferred embodiment, by a mechanical device. More preferably, said mechanical device is a forced guide bearing.
In a preferred embodiment of the analytical system hereinbefore described, said actuator is operated electromagnetically, pneumatically or hydraulically.
In a further preferred embodiment of the analytical system hereinbefore described, said actuator is reversibly linked to a robotic arm. This allows for automated simultaneous gripping, moving, treating etc. of the analytical disposables.
In a more preferred embodiment of the analytical system hereinbefore described, said gripping jaws are closed in their resting position, and said resting position is determined by springs.

In a preferred embodiment of the analytical system hereinbefore described, said analytical disposables are analytical vessels or disposable pipette tips. In the analytical system hereinbefore described, multiple analytical vessels can be moved from one storage or processing station to another. This allows for simultaneous handling of said analytical vessels, and, thus, for an equal exposure of said vessels and their contents to analytical conditions. This is important for obtaining reliable analytical results.

The contents of analytical vessels are analytical liquids. The term "analytical liquid" as used herein comprises any type of liquid or fluid which is used for in analytical testing. As non-limiting examples, such fluids may be fluids derived from biological samples, or processed fluids comprising analytes, or liquids used for processing and analysis of analytes in such analytical systems. According to the present invention, an "analyte" is understood to be a substance of interest, e.g. a nucleic acid of interest or a protein of interest which is investigated and its presence or absence, or its concentration in a biological sample is determined as its presence or absence is indicative of a certain condition or disease of a human or animal. In one preferred embodiment, said analyte is a biological analyte, more preferably a nucleic acid. Said nucleic acid may be RNA or DNA or any derivative thereof.

The present invention further relates to a handling device for handling analytical disposables comprising a handling tool with an interface as hereinbefore described for simultaneously handling more than one analytical disposables. Said handling device comprises an interface for interacting with at least two analytical disposables, and at least one actuator, wherein the number of actuators is lower than the number of analytical disposables.
Furthermore, said analytical disposables are handled simultaneously. Said handling device, and the preferred embodiments thereof, including the gripping device, are as described hereinbefore.

The present invention further relates to a transfer system for moving analytical disposables comprising a gripping device hereinbefore described, an actuator and a robotic arm, and to an analytical system comprising said transfer system. Furthermore, the present invention also relates to an analytical system comprising the transfer system hereinbefore described. More preferably, said analytical system additionally comprises at least one storage module for storing disposables or liquids used in the analytical test. In an even more preferred embodiment, said analytical system additionally comprises a processing module in which biological samples are processed for analysis. Such a processing module may further preferably comprise a sample preparation module wherein a fraction of said biological sample comprising the analyte is separated from other components of the biological sample. Preferably, when the analyte is a specific nucleic acid, said fraction comprises the nucleic acids present in the biological sample. In a further preferred embodiment, said processing module additionally comprises a thermal cycler module.
In a most preferred embodiment, said analytical system additionally comprises a detection module used for detecting a signal that is indicative of the amount of analyte present in the original biological sample.

In all of the embodiments described herein, the transfer system of the present invention can be used to transfer more than one disposables at a time between any of the modules comprised in an analytical system.

The analytical system, handling device and transfer system hereinbefore described can, therefore, be used in a process of simultaneously handling more than one analytical disposables hereinbefore described, comprising the steps of:
- handling said more than one analytical disposables with said handling device hereinbefore described,
- moving said analytical disposables with said transfer system hereinbefore described, and
- treating said analytical disposables in said analytical system hereinbefore described.

In this process, said analytical disposables hereinbefore described are handled simultaneously and exposed to equal conditions, which allows obtaining reliable analytical results.

Preferably, the actuator of said handling device can sequentially reversibly connect a handling tool, and after use, disconnect from said handling tool, and then connect to a different handling tool. Preferred embodiments of handling tools have been described hereinbefore. Handling tools that are disconnected from the actuator are located in a tool park (21).

### Figures

Fig. 1 shows perspective views of a multigripping device (1) which is driven by a single actuator in different positions of operation such that analytical vessels (3) can be gripped and moved.
Fig. 2 shows a sectional view of a gripping device (1) with an actuator (4) connected to it.
Fig. 3 is a sectional view showing the process of gripping and lifting a disposable tube.
Fig. 4 shows different types of multi-handling tools: a) a gripper tool, b) a needle/pipettor tool, c) a disposable tip tool, d) a piercing tool, e) a leakage test pressure tool.
Fig. 5 shows a detailed view of a pipetting needle tool.
Fig. 6 shows a detailed view of a piercing tool.
Fig. 7 shows an analytical system comprising a handling tool.

### Examples

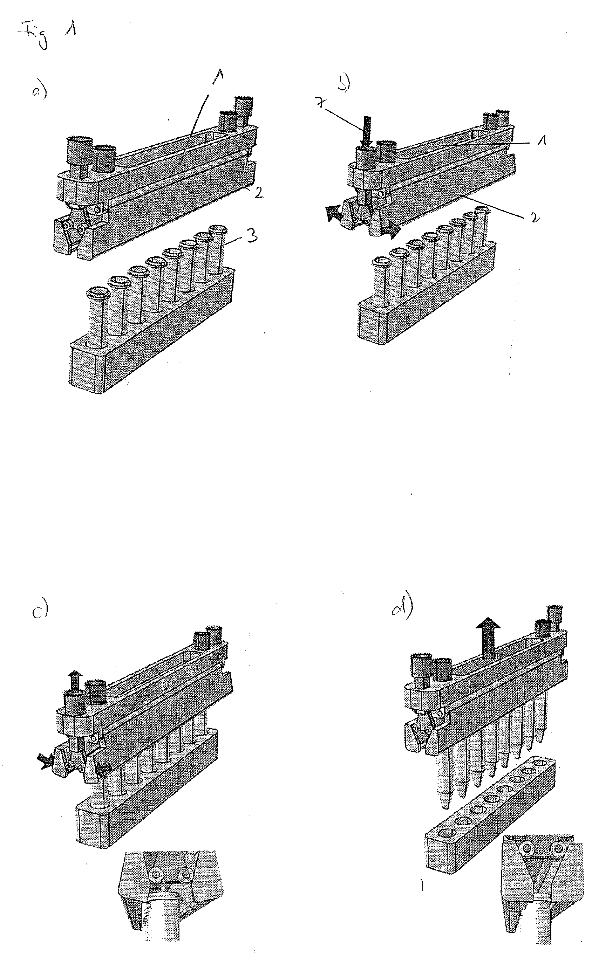

Fig. 1 discloses a gripping device (1) in different phases (a to d) of operation during the process of gripping analytical disposable tubes (3). Said gripping device comprises gripping jaws (2) which are moved to an open or closed position by a single actuator. In (a), the gripping device is shown in a closed resting position. The gripping jaws are held in the resting position by springs (5). In (b) the actuator confers a force (shown by arrow (7)) on the gripping device causing the gripping jaws (2) to move away from their closed resting position into an open position. Now, the gripping device is moved downwards to reach a position of the gripping jaws (2) relative to the analytical tubes (3) which will allow firm contact between gripping jaws and analytical tubes once the gripping jaws are moved into a closed position. In (c), it is shown how the gripping jaws (2) are driven by the actuator to move to a closed position (indicated by arrows). Finally, (d) shows how the multiple analytical tubes are simultaneously moved out of the rack in which they were previously positioned by an upwards movement of the gripping device (1). The multiple analytical disposable tubes may subsequently be placed e.g. in a heat block for incubation of a liquid contained in said tubes. The transfer and placement of multiple tubes in parallel, as shown here, makes it possible to expose the analytical disposables and their contents to the same conditions, e.g. incubation temperature and duration of incubation.

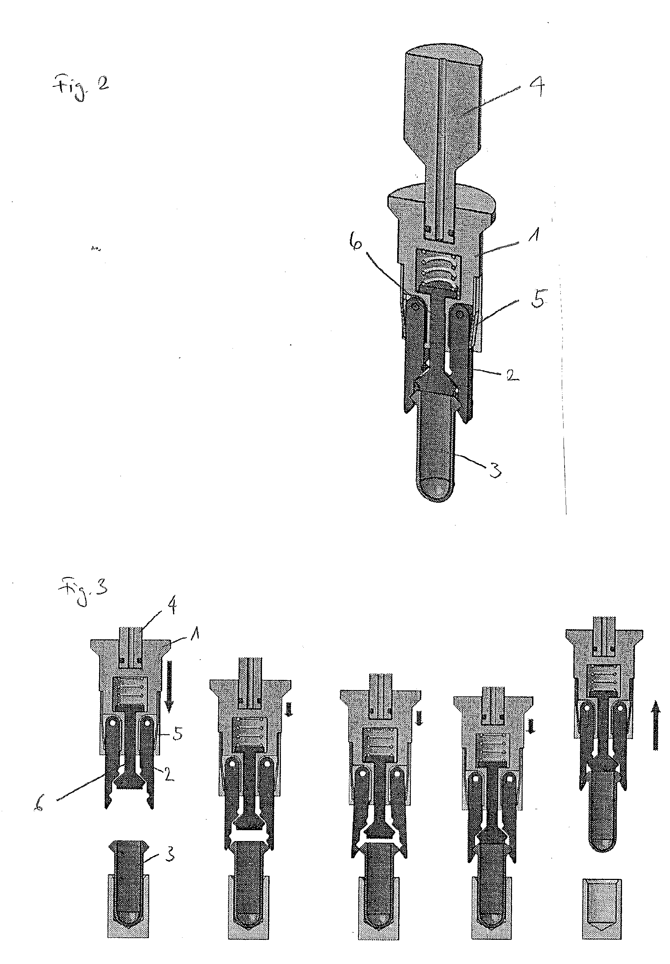

Fig. 2 shows a sectional view of a gripping device with a gripping tool (1) and an actuator (4) for gripping an analytical disposable tube (3) reversibly connected to the gripping tool (1). The gripping device comprises gripping jaws (2) and a plunger (6). The resting position of the gripping jaws (2) is controlled by a spring (5). The plunger controls the release of the disposables from the gripping device: The disposable is placed in a rack. Downward movement of the gripper causes the plunger (6) to be pressed upwards, away from the disposable. This causes the gripping jaws (2) to be moved slightly sideways, thus disconnecting them from the disposable. The gripping device can now be moved upwards without the disposable.

Fig. 3 is a sectional view showing the process of gripping and lifting a tube. In a) the gripping device(1) with gripping jaws (2) held in a resting position by springs (6) is moved downwards towards the disposable tube (3). In b) The gripping jaws (2) are forced outwards away from their resting position by the contact with the disposable. In c) the gripping jaws (2) are further moved outwards. In d) the gripping jaws are now snapped in and firmly connected with the upper rim (8) of the disposable tube (3). E) shows how the disposable tube (3) is now moved vertically by the gripping device (1).

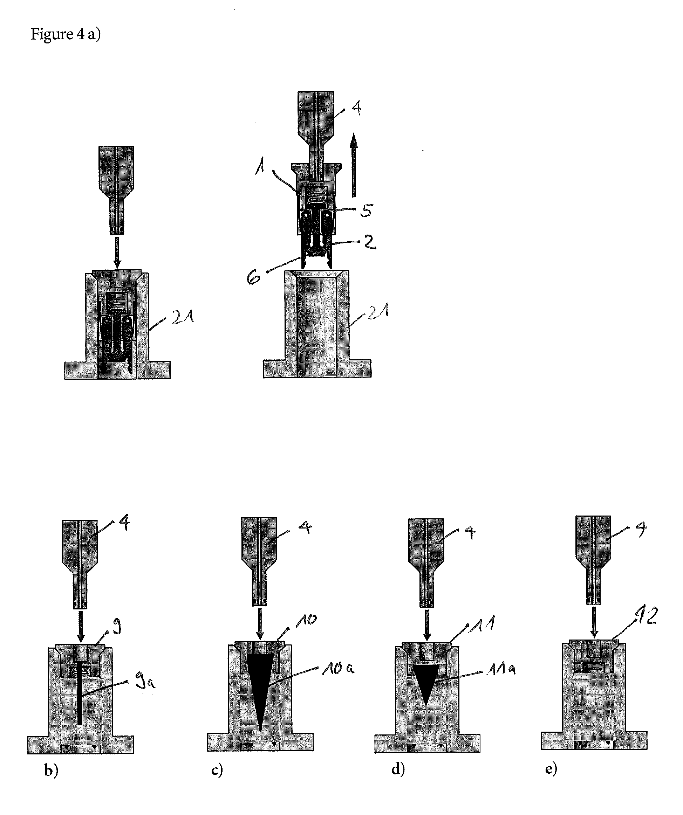

In Fig. 4, several handling tools are shown. Only one tool is shown, however, it is understood that a multi-handling tool according to the present invention comprises at least two tools in parallel. In a) a gripper tool is shown. In b) a needle/pipettor tool (9) is shown to which an actuator (4) can connect. The needle/pipettor tool comprises a needle (9a) which can be used to pipet liquid or to aspirate or dispense liquid. In c) a disposable tip tool (10) is shown to which an actuator (4) can connect and which comprises a disposable tip (10a). In d) a piercing tool (11) is shown to which an actuator (4) can connect and which comprises a piercing needle (11a). In e) a leakage test pressure tool (12) is shown to which an actuator (4) can connect.

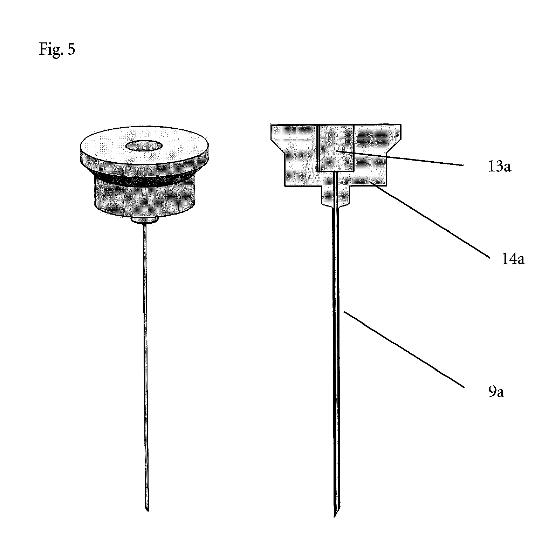

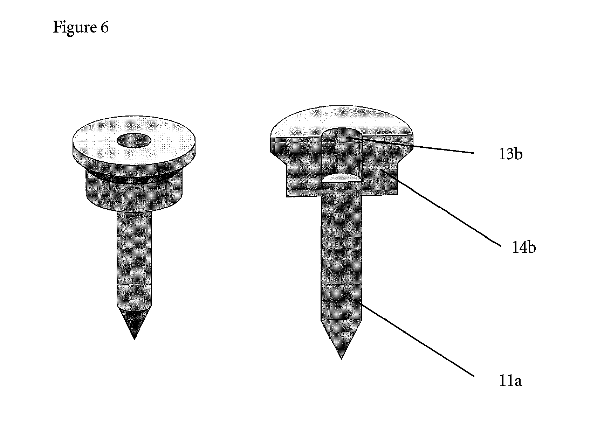

Fig. 5 shows a detailed view of a pipetting needle tool. A three-dimensional view is shown in a). in b) a sectional view is shown. In the embodiment shown, the pipetting needle tool comprises an actuator interface (13a), a tool-stack interface (14a) and a needle tool (9a). The embodiment of Fig. 6 is a piercing tool. A three-dimensional view is shown in a). in b) a sectional view is shown. The piercing tool comprises a actuator interface (13b), a tool-stack interface (14b) and a piercing tool (11a).

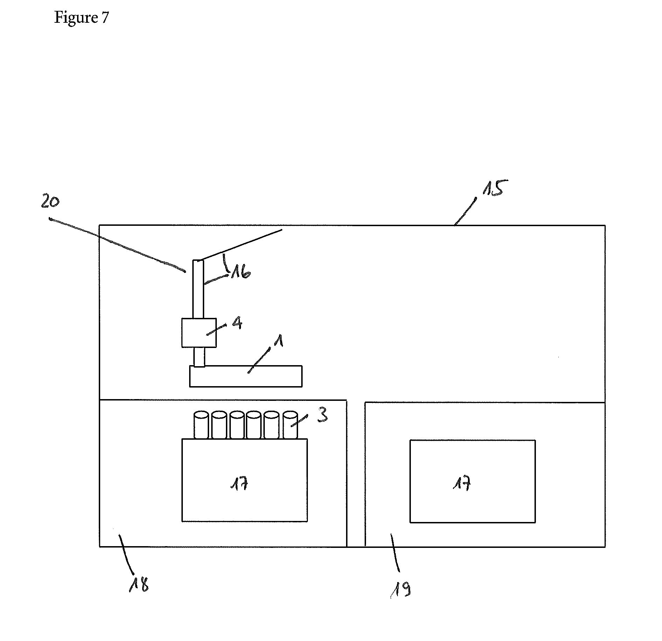

An automated analytical system (15) in which the handling device (1) is used can consist of multiple stations or modules, preferably, a storage station (18), a processing station (19) and/or detection station (Fig. 7). The storage station is loaded with analytical disposables such as pipette tips and reaction receptacles, which are also referred to as tubes (3). Said tubes (3) in this embodiment are kept in a rack (17). The analytical disposables are moved from the storage station (18) to the processing station (19) by using a transfer device (20). The transfer device comprises a robotic arm (16) to which an actuator (4) is coupled, and, a gripping device (1) which is reversibly connected to the actuator (4). The robotic arm (16) moves the gripping device into a position which allows gripping of the disposables, e.g. the tubes (3). Since multiple samples need to be analysed in parallel, the actuator (4) causes the required number of tubes (3) to be gripped by moving the gripping jaws (2) into a closed position such that they are in firm contact with the tubes (3) (see Fig. 1), and then the robotic arm (16) moves the assembly comprising actuator (4), gripping device (1) and tubes (3) from the storage station (18) to the processing station (19). Here, the tubes (3) are placed into a rack (17a) and the actuator (4) causes the gripping jaws (2) to be moved into an open position, thus releasing the tubes (3). The tubes (3) can now be filled with the samples and reagents needed for the analytical test. A transfer device (20) can now transfer the tubes (3) to other processing modules within the processing station, e.g. a magnetic unit for the separation of magnetic particles from the liquid after binding of an analyte, or a unit which is kept at a specific temperature for carrying out a reaction, such as an enzymatic reaction. After a specified time, the magnetic separation or the incubation at a specific temperature is terminated and the tubes are again moved to a different unit by a transfer device (20).
In an analytical system which also comprises a detection station, the tubes (3) comprising the processed samples may finally again be transferred to the detection station by a transfer device (20) comprising a gripping device (1).
The use of a gripping device (1) which can be operated by a single actuator (4) makes it possible to move all of the required tubes (4) for the analysis from one processing unit to the other at the same time, and, thus, the contents of the tubes are treated under the same conditions for the same period of time. This ensures consistency of the results that are obtained in the analytical procedure.

## Claims

1. An analytical system comprising a handling device for handling multiple analytical disposables, said handling device comprising
- a handling tool with an interface for interacting with at least two analytical disposables, and
- at least one actuator which reversibly connects to said handling tool, wherein the number of actuators is lower than the number of analytical disposables;
wherein said analytical disposables are handled simultaneously.

2. The analytical system of claim 1, wherein said at least one actuator can perform multiple operations.

3. The analytical system of claims 1 or 2, comprising at least two actuators.

4. The analytical system of any of claims 1 to 3, wherein any one of said actuators performs a different operation.

5. The analytical system of any one of claims 1 to 4, wherein said actuator is operated electromagnetically, pneumatically or hydraulically.

6. The analytical system of any one of claims 1 to 5, wherein said actuator is linked reversibly to a robotic arm.

7. The analytical system of any one of claims 1 to 5, wherein said handling device is a gripping device.

8. The analytical system of any one of claims 1 to 7, wherein said interface are gripping jaws.

9. The analytical system of any one of claims 1 to 8, wherein said gripping jaws are closed in their resting position and wherein the resting position is determined by springs.

10. The analytical system of any one of claims 1 to 9, wherein said objects are analytical vessels or pipette tips.

11. The analytical system of any one of claims 7 to 9, comprising a mechanical device which controls the movement of said gripping jaw.

12. The analytical system of claim 11, wherein said mechanical device is a forced guide bearing.

13. A handling device for handling analytical disposables comprising
- a handling tool with an interface for interacting with at least two analytical disposables, and
- at least one actuator, wherein the number of actuators is lower than the number of analytical disposables;
wherein said analytical disposables are handled simultaneously.

14. A transfer system for moving analytical disposables comprising a gripping device according to any one of claims 10 to 18, an actuator and a robotic arm.

15. An analytical system comprising a transfer system according to claim 19.

16. A process of simultaneously gripping and treating more than one analytical disposables in an analytical system according to claims 1 to 9 and/or 20, comprising the steps of:
- gripping said more than one analytical disposables with a gripping device according to any one of claims 10 to 18,
- moving said analytical disposables with a transfer system according to claim 19,
- treating said analytical disposables in said analytical system.
